# EUROPEAN PATENT SPECIFICATION

(11) **EP 0 895 687 B1**
(45) Date of publication and mention of the grant of the patent: **28.07.2004**
(21) Application number: 97923110.7
(22) Date of filing: 20.05.1997
(51) Int. Cl.: H04M 3/42

(54) **METHOD AND SYSTEM FOR MANAGING SUBSCRIBER RELATED SERVICES WITHIN A TELECOMMUNICATIONS NETWORK**
VERFAHREN UND SYSTEM ZUM VERWALTEN VON TEILNEHMERDIENSTEN IM EINEM TELEKOMMUNIKATIONSNETZ
PROCEDE ET SYSTEME DE GESTION DE SERVICES RELATIFS A DES ABONNES DANS UN RESEAU DE TELECOMMUNICATIONS

(30) Priority: 21.05.1996 FI 962146; 18.10.1996 FI 964200
(43) Date of publication of application: 10.02.1999
(73) Proprietor: TeliaSonera Finland Oyj, 00510 Helsinki (FI)
(72) Inventor: SUOMINEN, Antti-Jussi, FIN-00180 Helsinki (FI); MATTILA, Ari-Pekka, FIN-02280 Espoo (FI); HOLMBERG, Andreas, FIN-00200 Helsinki (FI); TÖHÖNEN, Harri, FIN-00150 Helsinki (FI); HALME, Petri, FIN-00530 Helsinki (FI); OLLIKAINEN, Jussi, FIN-00630 Helsinki (FI)
(74) Representative: Simmelvuo, Markku Kalevi
(86) International application number: PCT/FI1997/000299
(87) International publication number: WO 1997/044943

(56) References cited:
- WO-A-92/11724
- WO-A-96/13927
- WO-A-96/31987
- US-A- 5 241 588

## Description

### FIELD OF THE INVENTION

The present invention relates to a novel method and system for modifying and/or managing teleservices within a telecommunications network.

### BACKGROUND OF THE INVENTION

Nowadays both in a fixed telephone network and in a mobile telephone network many service varieties are available relating to the possibilities offered by an operator of a wired or a wireless telephone. These services may include a fixed or a remote-controllable call diversion, knocking, blocking of the numerical display, advance noticing of the invoicing to the subscriber and the like. The use of these services is selective from the subscriber's point of view or the subscriber may decide, when he shall utilise each service. It is possible to couple the services for operation at least in two ways or by giving to the operator a commission to couple the service or by calling a certain number, which has a menu to be controlled by the keyboard of the telephone and a guiding voice.

At the present the subscriber may himself perform the control modes of his telecommunication services only in a very limited way through the telephone network (e.g. fixed call diversion programmed by the key combination *21 *... #). In configuration modifications that are even slightly more difficult one must call the teleoperator or service provider and ask him to make the desired change. In control solutions realised with the help of the voice frequency telephone (DTMF) and automatic telephone service systems (APJ) only telephone keys (= 1, 2, ..., 0, #, *) and voice guides are available. By them it is difficult to carry out the control modes of complicated services so, that the final result would be ergonomic for the user. When the number of menus increases, the user often "drowns" among the menus and does not know any more (i.e. does not see) in which menu he/she is in any time, when the visual feedback from the location in the menu is lacking.

A further problem is that the teleoperator or service provider must bind resources to the customer service in order to be able to offer to the subscribers flexible control over their services.

WO 9211724 discloses a system and method for creating and modifying intelligent telephone network call processing logic trees that can be customised for individual customers and created in a user-friendly environment. However, WO 9211724 does not disclose any client authentication. Thus, it is not possible to manage large amount of customers with different needs. Also, the application according to WO 9211724 is designed to help the operator combining and providing services needed to by the subscriber. Thus, it does not help a client who wants to make his own decisions and to manage his own service profile.

### PURPOSE OF THE INVENTION

The object of the present invention is to eliminate the above-mentioned drawbacks. The object of the present invention is particularly to set forth a novel method and system enabling coupling of the services related to the telephone by the subscriber's own actions. A further object of the invention is to facilitate by a graphical user interface the action of subscribers when selecting and guiding the services.

An object of the invention is further on to improve the possibilities of the customer to decide himself when and with what kind of configuration he wants to use his teleservices. At the same time the workload of the operator's customer service is reduced in simple configuration alterations.

An object of the invention is also to make it possible for a customer by a novel server platform implemented to a telecommunications network to get in contact with the teleservice library or -menu maintained by the teleoperator, and then with the help of a graphical user interface independently edit and control the desired teleservices.

### SUMMARY OF THE INVENTION

The system according to the invention for managing subscriber related services, as call diversion or knocking by actions of a subscriber, includes according to the invention means for identifying the subscriber and means for forming a graphic or text-based presentation from the subscriber information on the grounds of the subscriber identification. In one preferable embodiment the server comprises a kind of a server platform, including a network server understanding the HTML protocol, preferably an Internet-server and a changing and/or controlling server understanding also the HTML protocol. The controlling server is preferably connected to the Internet-server, which is in connection to the teleoperator's database. In one advantageous embodiment the user interface of the changing and/or controlling server comprises a graphic operational connection of www-type. A subscriber register database is also preferably connected with the controlling server. In another advantageous embodiment both the teleoperator's database and the subscriber register database are in connection with the customer database transmitting the customer data to the adaptation server connected with the transforming and/or controlling server of teleservices.

The system includes also a terminal device according to the invention being connected by telecommunication connection, preferably the Internet network, to the server and to which device includes means to give a subscriber-related identification symbol to the server and a display to present subscriber-related information graphically or as text data. The telecommunication connection can be established also for example in the telephone network by a modem. The terminal device may comprise a computer, a portable mobile station or the like, and by it the control data given by the subscriber are transmitted to the server. Then the server relays to the subscriber according to the identification symbol given by the subscriber the menu of subscriber-related services, in which subscriber-related coupled services are presented, and a menu, from which the subscriber selects the service to be coupled.

An advantage of the present invention compared with the prior art is, that it is possible to offer to the user of the teleservice a control solution, by which the subscriber can be coupled to the operator's information systems and alter or check by himself the information included in his services in such a way, that the solution is sufficiently versatile, easy-to-use and economical for the user and on the other hand sufficiently flexible and safe for the operator.

Further because of the invention following advantages are obtained concerning the subscriber. The system according to the invention offers significantly more versatile alternatives to realise control solutions for complicated services including many qualities by the selfservice principle, because the subscriber sees the respective configuration of his own services clearly in a visual way. A further advantage of the invention is that the subscriber may decide himself and select, when and what kind of service guiding he is going to use.

Additionally one advantage of the present invention considered from the operator's point of view is that there is no problem concerning the distribution and/or updating of the customer application, because this application is updated automatically for all users, when the operator updates the information of the concentrated server and the service routines integrated into it. Additionally because of the invention all the system components requiring the maintenance are in the operator's and service provider's own network and control. Thus also the service assortment visible to the subscriber can flexibly be altered.

Further on due to the invention the operator's workload is reduced in routine simple operations and the system is available from anywhere in the world through Internet. Additionally several services can flexibly be connected to the system and it can also be used as a marketing and advertising channel for new teleservices.

### BRIEF DESCRIPTION OF THE DRAWINGS

In the followin the invention will be described with the help of enclosed performance examples with reference to the accompanying drawing, in which
figure 1 shows one system according to the present invention;
figure 2 shows diagrammatic plan of the operation of the system according tto the invention; and
figure 3 shows as an example one graphical user interface according to the invention.

### DETAILED DESCRIPTION OF THE INVENTION

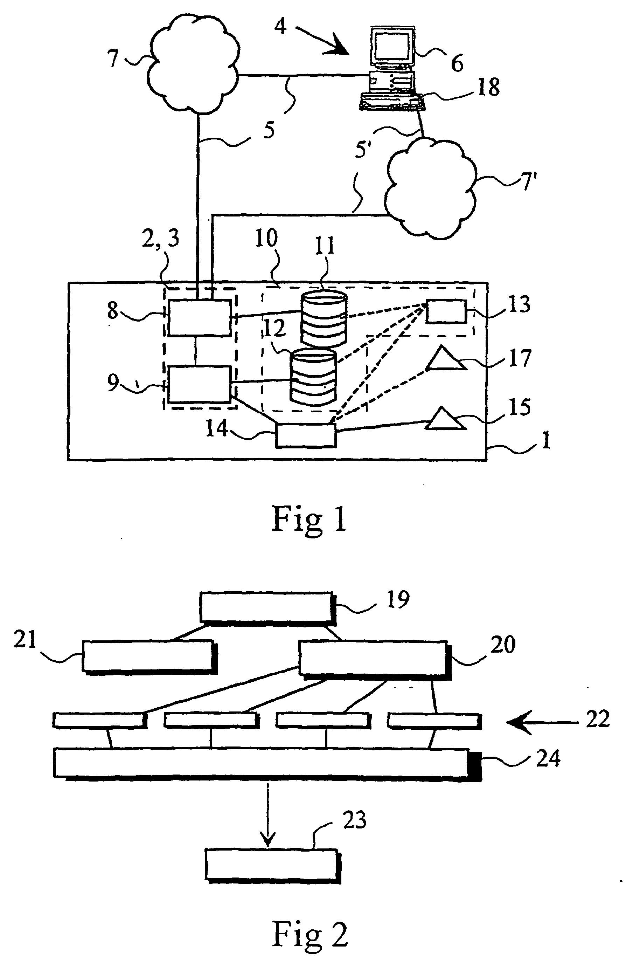

The system shown in Fig. 1 includes a computer 4 comprising the display 6 and the keyboard 18. The system comprises further the server platform 1, including the network server 8 and the control server 9. The computer 4 is associated through a telecommunication connection 5, 5' to the server 1. The telecommunication connection can be established to the Internet network 7 or to any other corresponding network 7 transmitting the data. The server assembly 1 has been established advantageously by two server computers, of which one serves as a usual network server understanding the HTML protocol for example in the Internet-network, and the other is also a control server understanding the HTML protocol. In the computers 8, 9 suitable software 2, 3 has been arranged, by which the subscriber identification is established, when the subscriber is entering at the system, a graphic presentation is made for the services coupled to the subscriber and a service menu, from which the subscriber may couple for himself extra services. Such a graphic presentation comprises generally a WWW page.

The system shown in Fig. 1 includes also database means 10, with which the teleoperator's database 11, the subscriber register database 12 and the customer database 13 are maintained. The database means are connected to the server 1, whereby it is possible to obtain subscriber-related information from the databases and the services coupled by the subscriber can be updated to them under the control of the server. In Fig. 1 it is shown an application server 15, which is coupled between the telephone network and the Internet network. In Fig. 1 it is also set forth a service network element 17, with which an external service provider may connect his own service to the system.

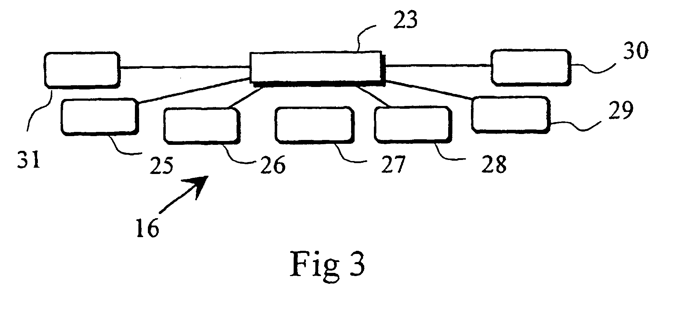

In the following it is presented with reference to figure 2 and figure 3, in which one exemplary graphical user interface 16 is shown, one example of the subscriber's login procedure. In Fig. 2 in the block 19 the teleoperator's home page in the Internet is described. From this home page the subscriber gets the connection to other WWW services, block 21, and to the system according to the invention, block 20. In this way the subscriber may select a link from any start page to the system in question 20. According to the invention it is possible to connect different subscribers, as private and business customers, to the system. Different customers are described by the blocks shown by the arrow 22. The customer enters to the system in the block 24 and in association with the login the system checks the subscriber information from different databases. After the login, block 23, a subscriber-related service menu 16 is opened to the subscriber, which menu is shown in Fig. 3. The service menu 16 may include different kinds of optional services, blocks 25 - 31. In one example 10 by selecting one block 25 - 31 and accepting the selection the subscriber may couple the service in question on or off depending the service status at that time. Based on this the control server 9 updates databases according to the need.

It is also pointed out that Internet is by no means the only possible operational environment, but that any other telecommunication network system is valid. It is not either required that a WWW user interface compatible with the IP protocol will necessarily be used as a 20 graphical user interface, but any other graphical user interface, e.g. MS-WINDOWS, is valid for realising the principal idea of the present invention. It should be observed that it is possible to use a traditional textbased user interface to be offered via the terminal connection.

As a conclusion about the invention it is possible to state as follows. By the invention following problems will be solved. Firstly the user identification can automatically be made in association with the login. Further on the system according to the invention offers a user-related and dynamically changing graphical interface that the teleoperator may control. The subscriber is also connected by the user identifier to the information used by the telephone network and only limited operations are permitted and only limited information is presented to the user. The limitation can be made relating to the subscriber based on the user identification. Further on the access of the user to the information of other users is prevented in the system.

The invention is not limited only to the embodiment examples presented above, but many modifications are possible while staying within the inventive idea defined in the accompanying claims.

## Claims

1. A system for managing telephone network's subscriber related services, as call diversion, knocking and the like by actions of a subscriber, said system including a terminal device (4), which is connected by a telecommunication connection (5) to a server (1) and said terminal device has a display (6) for the presentation of the subscriber related information graphically or as text data and means (18) for giving the subscriber related identification to the server (1) in order to transmit control information given by the subscriber to the server (1), **characterized in that** said server (1) includes:
means (2) for a subscriber identification and means (3) for establishing a graphic or text-based presentation from the subscribe-related information on the grounds of the subscriber identification;
whereby the server is adapted to transmit to the subscriber according to the identifier given by the subscriber a menu of subscriber related services, in which are presented the subscriber related coupled services, and a menu, from which the subscriber selects the service to be coupled.

2. A system according to claim 1, **characterized in that** the server (1) is realised in a telecommunication network (7); and that the server includes:
a network server (8) for establishing a telecommunication connection (5) to the telecommunication network and through this to the terminal device (4); and
a control server (9), which is connected to the network server for controlling subscriber related services in the telephone network, and to which has been arranged a graphical user interface.

3. A system according to claims 1 or 2, **characterized in that** the system includes database means (10) for maintaining teleoperator's database (11), subscriber register database (12) and customer database (13).

4. A system according to any of the preceding claims 1 - 3, **characterized in that** the 5 system includes an application server (14), which is arranged to combine together the telephone network and the telecommunication network (7).

5. A system according to claim 4, **characterized in that** the system includes a service network element (15) for coupling the services of a service provider to the system.

6. A system according to any of the preceding claims 1 - 5, **characterized in that** the graphical user interface includes a subscriber-related service menu (16).

7. A system according to any of the preceding claims 1 - 6, **characterized in that** the system includes a teleservice library (17), to which has been deposited the information concerning the service provided in the telephone network, and which is maintained by the teleoperator and/or the service provider; and that a connection is arranged from the server (1) to the teleservice library.

8. A system according to any of the preceding claims 1 - 7, **characterized in that** the teleconnection between the server (1) and the terminal device (5) has been established by a HTML protocol.

9. A system according to any of the preceding claims 1 - 8, **characterized in that** the telecommunication network comprises the Internet network or the like.

10. A method for managing telephone network's subscriber related services, as call diversion, knocking and the like by actions of a subscriber in a telecommunications system, said system including a terminal device (4), which is connected by a telecommunication connection (5) to a server (1) and said terminal device has a display (6) for the presentation of the subscriber related information graphically or as text data and means (18) for giving the subscriber related identification to the server in order to transmit control information given by the subscriber to the server, in which method the subscriber related identification is given and presented by the means of the terminal device, **characterized in that** the method comprises the step of:
identifying the subscriber by the means of a server (1), the server (1) including means (2) for a subscriber identification and means (3) for establishing a graphic or text-based presentation from the subscribe-related information on the grounds of the subscriber identification;
whereby the server (1) transmits to the subscriber according to the identifier given by the subscriber a menu of subscriber related services, in which are presented the subscriber related coupled services, and a menu, from which the subscriber selects the service to be coupled.

11. A method according to claim 10, **characterized in that** the method further comprises the steps of:
realising the server (1) in a telecommunication network (7);
establishing a telecommunication connection (5) via a network server (8) for and through this to the terminal device (4); and
connecting a control server (9), to which has been arranged a graphical user interface, to the network server for controlling subscriber related services in the telephone network.

12. A method according to claims 10 or 11, **characterized in that** the method comprises the step of maintaining teleoperator's database (11), subscriber register database (12) and customer database (13) using database means (10).

13. A method according to any of the preceding claims 10 - 12, **characterized in that** the method comprises the step of matching the telephone network and the telecommunication network (7) together using application server (14).

14. A method according to claim 13, **characterized in that** the method comprises the step of coupling the services of a service provider to the system using a service network element (15).

15. A method according to any of the preceding claims 10 - 14, **characterized in that** the method comprises the step of presenting in the graphical user interface a subscriber-related service menu (16).

16. A method according to any of the preceding claims 10 - 15, **characterized in that** the method comprises the steps of:
recording to a teleservice library (17) the information concerning the service provided in the telephone network; and
connecting the server (1) to the teleservice library.

17. A method according to any of the preceding claims 10 - 16, **characterized in that** the method comprises the step of connecting the server (1) and the terminal device (5) using a HTML protocol.

18. A method according to any of the preceding claims 10 - 17, **characterized in that** the telecommunication network comprises the Internet network or the like.

## Patentansprüche

1. System zum Managen bzw. Bewerkstelligen von Teilnehmerdiensten eines Telefonnetzwerkes, wie z.B. Anrufumleitung, Anklopfen und Ähnliches durch Aktionen eines Teilnehmers, wobei das System eine Endgerätvorrichtung (4) beinhaltet, welche über eine Telekommunikationsverbindung (5) mit einem Server (1) verbunden ist und die Endgerätvorrichtung ein Display (6) zur Präsentation der teilnehmerbezogenen Information in graphischer Form oder als Textdaten und eine Vorrichtung (18) zum Übergeben der teilnehmerbezogenen Identifikation an den Server (1) besitzt, um die Steuerinformation, welche durch den Teilnehmer an den Server (1) übergeben wurde, zu übertragen, **dadurch gekennzeichnet, dass** der Server (1) beinhaltet:
eine Vorrichtung (2) für eine Teilnehmeridentifikation und eine Vorrichtung (3) zum Erstellen einer graphischen oder textbezogenen Präsentation aus der teilnehmerbezogenen Information auf den Grundlagen der Teilnehmeridentifikation;
wobei der Server angepasst ist, an den Teilnehmer entsprechend dem Identifizierer ein durch den Teilnehmer gegebenes Menü von teilnehmerbezogenen Diensten, in welchem die teilnehmerbezogenen gekoppelten bzw. angeschlossenen Dienste präsentiert werden, und ein Menü, aus welchem der Teilnehmer den anzuschließenden Service auswählt, zu übertragen.

2. System nach Anspruch 1, **dadurch gekennzeichnet, dass** der Server (1) in einem Telekommunikationsnetzwerk (7) realisiert ist; und dass der Server beinhaltet:
einen Netzwerk-Server (8) zum Erstellen einer Telekommunikationsverbindung (5) mit dem Telekommunikationsnetzwerk und über dieses an die Endgerätvorrichtung (4); und
einen Steuer-Server (9), welcher mit dem Netzwerk-Server verbunden ist, um die teilnehmerbezogenen Dienste in dem Telefonnetzwerk zu steuern und an welchem ein graphisches Nutzer-Interface angeordnet worden ist.

3. System nach Anspruch 1 oder 2, **dadurch gekennzeichnet, dass** das System eine Datenbasisvorrichtung (10) beinhaltet, um die Datenbasis (11) des Teleoperators, die Datenbasis (12) des Teilnehmerregisters und die Datenbasis (13) des Kunden zu betreiben bzw. zu warten.

4. System nach einem der vorausgehenden Ansprüche 1 - 3, **dadurch gekennzeichnet, dass** das System einen Applikations-Server (14) beinhaltet, welcher angeordnet ist, um das Telefonnetzwerk und das Telekommunikationsnetzwerk (7) miteinander zu kombinieren.

5. System nach Anspruch 4, **dadurch gekennzeichnet, dass** das System ein Service-Netzwerkelement (15) beinhaltet, um die Dienste eines Service Providers an das System anzukoppeln.

6. System nach einem der vorausgehenden Ansprüche 1 - 5, **dadurch gekennzeichnet, dass** das graphische Nutzer-Interface ein teilnehmerbezogenes Service-Menü (16) beinhaltet.

7. System nach einem der vorausgehenden Ansprüche 1 - 6, **dadurch gekennzeichnet, dass** das System eine Teledienst-Bibliothek (17) beinhaltet, in welcher die Information bezüglich des in dem Telefonnetzwerk gelieferten Dienstes abgelegt worden ist und welche von dem Teleoperator und/oder dem Dienstleister gewartet wird; und dass eine Verbindung von dem Server (1) zu der Teledienst-Bibliothek angeordnet ist.

8. System nach einem der vorausgehenden Ansprüche 1 - 7, **dadurch gekennzeichnet, dass** die Televerbindung (5) zwischen dem Server (1) und der Endgerätvorrichtung (4) durch ein HTML-Protokoll errichtet worden ist.

9. System nach einem der vorausgehenden Ansprüche 1 - 8, **dadurch gekennzeichnet, dass** das Telekommunikationsnetzwerk das Internet-Netzwerk oder ein ähnliches aufweist.

10. Verfahren zum Managen bzw. Bewerkstelligen von teilnehmerbezogenen Diensten eines Telefonnetzwerkes, wie z.B. Rufumleitung, Anklopfen und Ähnliches durch Aktionen eines Teilnehmer in einem Telekommunikationssystem, wobei das System eine Endgerätvorrichtung (4) beinhaltet, welche über eine Telekommunikationsverbindung (5) mit einem Server (1) verbunden ist, und wobei die Endgerätvorrichtung ein Display (6) zum Präsentieren der teilnehmerbezogenen Information in graphischer Weise oder als Textdaten und eine Vorrichtung (18) besitzt, um die teilnehmerbezogene Identifikation an den Server zu geben, um Steuerinformation, welche durch den Teilnehmer an den Server gegeben wird, zu übertragen, wobei in dem Verfahren die teilnehmerbezogene Identifikation mit Hilfe einer Endgerätvorrichtung gegeben und präsentiert wird, **dadurch gekennzeichnet, dass** das Verfahren die Schritte aufweist:
Identifizieren des Teilnehmers mit Hilfe eines Servers (1), wobei der Server (1) eine Vorrichtung (2) zur Teilnehmeridentifikation und eine Vorrichtung (3) zum Erstellen einer graphischen oder einer textbezogenen Präsentation aus der teilnehmerbezogenen Information auf den Grundlagen der Teilnehmeridentifikation beinhaltet;
wobei der Server (1) an den Teilnehmer entsprechend dem Identifizierer ein durch den Teilnehmer gegebenes Menü von teilnehmerbezogenen Diensten, in welchem die teilnehmerbezogenen angeschlossenen Dienste dargeboten werden, und ein Menü, aus welchem der Teilnehmer den Service auswählt, welcher anzukoppeln bzw. anzuschließen ist, überträgt.

11. Verfahren nach Anspruch 10, **dadurch gekennzeichnet, dass** das Verfahren ferner die Schritte aufweist:
Realisieren des Servers (1) in einem Telekommunikationsnetzwerk (7);
Erstellen einer Telekommunikationsverbindung (5) über einen Netzwerk-Server (8) für und durch diesen zu der Endgerätvorrichtung (4); und
Anschließen eines Steuer-Servers (9), bei welchem ein graphisches Nutzer-Interface angeordnet wurde, an den Netzwerk-Server, um die teilnehmerbezogenen Dienste in dem Telefonnetzwerk zu steuern.

12. Verfahren nach Anspruch 10 oder 11, **dadurch gekennzeichnet, dass** das Verfahren die Schritte des Wartens der Datenbasis (11) des Teleoperators, der Datenbasis (12) des Teilnehmerregisters und der Datenbasis (13) des Kunden aufweist, wobei eine Datenbasisvorrichtung (10) benutzt wird.

13. Verfahren nach einem der vorausgehenden Ansprüche 10 - 12, **dadurch gekennzeichnet, dass** das Verfahren den Schritt des Anpassens des Telefonnetzwerkes und des Telekommunikationsnetzwerkes (7) aneinander aufweist, wobei ein Applikations-Server (14) benutzt wird.

14. Verfahren nach Anspruch 13, **dadurch gekennzeichnet, dass** das Verfahren den Schritt des Koppelns der Dienste eines Service Providers an das System aufweist, wobei ein Service-Netzwerkelement (15) genutzt wird.

15. Verfahren nach einem der vorausgehenden Ansprüche 10 - 14, **dadurch gekennzeichnet, dass** das Verfahren den Schritt des Präsentierens eines teilnehmerbezogenen Service-Menüs (16) in dem graphischen Nutzer-Interface aufweist.

16. Verfahren nach einem der vorausgehenden Ansprüche 10 - 15, **dadurch gekennzeichnet, dass** das Verfahren die Schritte aufweist:
Aufzeichnen der Information, welche den in dem Telefonnetzwerk gelieferten Dienst betrifft, in einer Teledienst-Bibliothek (17); und
Verbinden bzw. Anschließen des Servers (1) mit der bzw. an die Teledienst-Bibliothek.

17. Verfahren nach einem der vorausgehenden Ansprüche 10 - 16, **dadurch gekennzeichnet, dass** das Verfahren den Schritt des Verbindens des Servers (1) und der Endgerätvorrichtung (5) aufweist, wobei ein HTML-Protokoll genutzt wird.

18. Verfahren nach einem der vorausgehenden Ansprüche 10 - 17, **dadurch gekennzeichnet, dass** das Telekommunikationsnetzwerk das Internet-Netzwerk oder Ähnliches aufweist.

## Revendications

1. Système pour gérer des services relatifs à des abonnés d'un réseau téléphonique, tels qu'un transfert d'appel, une identification et similaire, par des actions d'un abonné, ledit système comprenant un dispositif terminal (4), qui est connecté par une connexion de télécommunication (5) à un serveur (1), ledit dispositif terminal comportant un écran (6) pour la présentation des informations relatives à l'abonné graphiquement ou en tant que données textuelles et des moyens (18) pour donner au serveur (1) l'identification relative à l'abonné afin de transmettre au serveur (1) des informations de contrôle données par l'abonné, **caractérisé en ce que** ledit serveur (1) comprend :
des moyens (2) pour une identification d'abonné et des moyens (3) pour établir une présentation graphique ou textuelle à partir des informations relatives à l'abonné en vue de l'identification de l'abonné ;
moyennant quoi le serveur est adapté pour transmettre à l'abonné, en fonction de l'identificateur donné par l'abonné, un menu de services relatifs à l'abonné, dans lequel sont présentés les services couplés relatifs à l'abonné, et un menu à partir duquel l'abonné sélectionne le service à coupler.

2. Système selon la revendication 1, **caractérisé en ce que** le serveur (1) est réalisé dans un réseau de télécommunication (7) ; et **en ce que** le serveur comprend :
un serveur de réseau (8) pour établir une connexion de télécommunication (5) au réseau de télécommunication et par l'intermédiaire de celui-ci au dispositif terminal (4) ; et
un serveur de contrôle (9), qui est connecté au serveur de réseau pour contrôler des services relatifs à un abonné dans le réseau téléphonique, et pour lequel une interface utilisateur graphique a été agencée.

3. Système selon la revendication 1 ou 2, **caractérisé en ce que** le système comprend des moyens formant base de données (10) pour mettre à jour une base de données (11) de téléopérateur, une base de données de registres des abonnés (12) et une base de données de clients (13).

4. Système selon l'une quelconque des revendications précédentes 1 à 3, **caractérisé en ce que** le système comprend un serveur d'applications (14) qui est agencé pour combiner ensemble le réseau téléphonique et le réseau de télécommunication (7).

5. Système selon la revendication 4, **caractérisé en ce que** le système comprend un élément de réseau de services (15) pour coupler les services d'un fournisseur de services au système.

6. Système selon l'une quelconque des revendications précédentes 1 à 5, **caractérisé en ce que** l'interface utilisateur graphique comprend un menu de services relatifs à un abonné (16).

7. Système selon l'une quelconque des revendications précédentes 1 à 6, **caractérisé en ce que** le système comprend une bibliothèque de téléservices (17), dans laquelle les informations concernant le service fourni dans le réseau téléphonique ont été déposées, et qui est mise à jour par le téléopérateur et/ou le fournisseur de services ; et **en ce qu'**une connexion est agencée du serveur (1) à la bibliothèque de téléservices.

8. Système selon l'une quelconque des revendications précédentes 1 à 7, **caractérisé en ce que** la connexion de télécommunication entre le serveur (1) et le dispositif terminal (5) a été établie par un protocole HTML.

9. Système selon l'une quelconque des revendications précédentes 1 à 8, **caractérisé en ce que** le réseau de télécommunication comprend le réseau Internet ou similaire.

10. Procédé pour gérer des services relatifs à des abonnés d'un réseau téléphonique, tels qu'un transfert d'appel, une identification et similaire, par des actions d'un abonné, dans un système de télécommunication, ledit système comprenant un dispositif terminal (4), qui est connecté par une connexion de télécommunication (5) à un serveur (1), ledit dispositif terminal comportant un écran (6) pour la présentation des informations relatives à l'abonné graphiquement ou en tant que données textuelles et des moyens (18) pour donner au serveur l'identification relative à l'abonné afin de transmettre au serveur des informations de contrôle données par l'abonné, dans lequel procédé l'identification relative à l'abonné est donnée et présentée au moyen du dispositif terminal, **caractérisé en ce que** le procédé comprend l'étape consistant à :
identifier l'abonné au moyen d'un serveur (1), le serveur (1) comprenant des moyens (2) pour une identification d'abonné et des moyens (3) pour établir une présentation graphique ou textuelle à partir des informations relatives à l'abonné en vue de l'identification de l'abonné ;
moyennant quoi le serveur (1) transmet à l'abonné, en fonction de l'identificateur donné par l'abonné, un menu de services relatifs à l'abonné, dans lequel sont présentés les services couplés relatifs à l'abonné, et un menu à partir duquel l'abonné sélectionne le service à coupler.

11. Procédé selon la revendication 10, **caractérisé en ce que** le procédé comprend en outre les étapes consistant à :
réaliser le serveur (1) dans un réseau de télécommunication (7) ;
établir une connexion de télécommunication (5) par l'intermédiaire d'un serveur de réseau (8) pour et par l'intermédiaire de celui-ci au dispositif terminal (4) ; et
connecter un serveur de contrôle (9), pour lequel une interface utilisateur graphique a été agencée, au serveur de réseau pour contrôler des services relatifs à un abonné dans le réseau téléphonique.

12. Procédé selon la revendication 10 ou 11, **caractérisé en ce que** le procédé comprend l'étape consistant à mettre à jour une base de données (11) de téléopérateur, une base de données de registres des abonnés (12) et une base de données de clients (13) en utilisant des moyens formant base de données (10).

13. Procédé selon l'une quelconque des revendications précédentes 10 à 12, **caractérisé en ce que** le procédé comprend l'étape consistant à coupler le réseau téléphonique et le réseau de télécommunication (7) l'un à l'autre en utilisant un serveur d'applications (14).

14. Procédé selon la revendication 13, **caractérisé en ce que** le procédé comprend l'étape consistant à coupler les services d'un fournisseur de services au système en utilisant un élément de réseau de services (15).

15. Procédé selon l'une quelconque des revendications précédentes 10 à 14, **caractérisé en ce que** le procédé comprend l'étape consistant à présenter dans l'interface utilisateur graphique un menu de services relatifs à un abonné (16).

16. Procédé selon l'une quelconque des revendications précédentes 10 à 15, **caractérisé en ce que** le procédé comprend les étapes consistant à :
enregistrer, dans une bibliothèque de téléservices (17), les informations concernant le service fourni dans le réseau téléphonique ; et
connecter le serveur (1) à la bibliothèque de téléservices.

17. Procédé selon l'une quelconque des revendications précédentes 10 à 16, **caractérisé en ce que** le procédé comprend l'étape consistant à connecter le serveur (1) et le dispositif terminal (5) en utilisant un protocole HTML.

18. Procédé selon l'une quelconque des revendications précédentes 10 à 17, **caractérisé en ce que** le réseau de télécommunication comprend le réseau Internet ou similaire.
